Europäisches Patentamt

European Patent Office

Office européen des brevets

(11) Publication number: **0 346 915**
**A2**

## (12) EUROPEAN PATENT APPLICATION

(21) Application number: 89110937.3

(51) Int. Cl.⁴: **G06F 12/08**

(22) Date of filing: 16.06.89

(30) Priority: 17.06.88 US 207872

(43) Date of publication of application:
**20.12.89 Bulletin 89/51**

(84) Designated Contracting States:
**DE FR GB**

(71) Applicant: **Modular Computer Systems Inc.**
**Box 60 99 1650 West McNab Road**
**Fort Lauderdale Fl 33310(US)**

(72) Inventor: **Straus, Wayne W.**
**2560 NE 27th Street**
**Lighthouse Point Fl. 33064(US)**

(74) Representative: **Vogl, Leo, Dipl.-Ing.**
**AEG Aktiengesellschaft Theodor-Stern-Kai 1**
**D-6000 Frankfurt am Main 70(DE)**

(54) Cache breakpoint system for computers.

(57) In a computer system with a cache and a comparator gates are provided which are connected with the comparator and with the cache sets and wherein for each cache set an auxiliary ram is provided.

FIG.4

Xerox Copy Centre

## Cache Breakpoint System for Computers

Background of the Invention

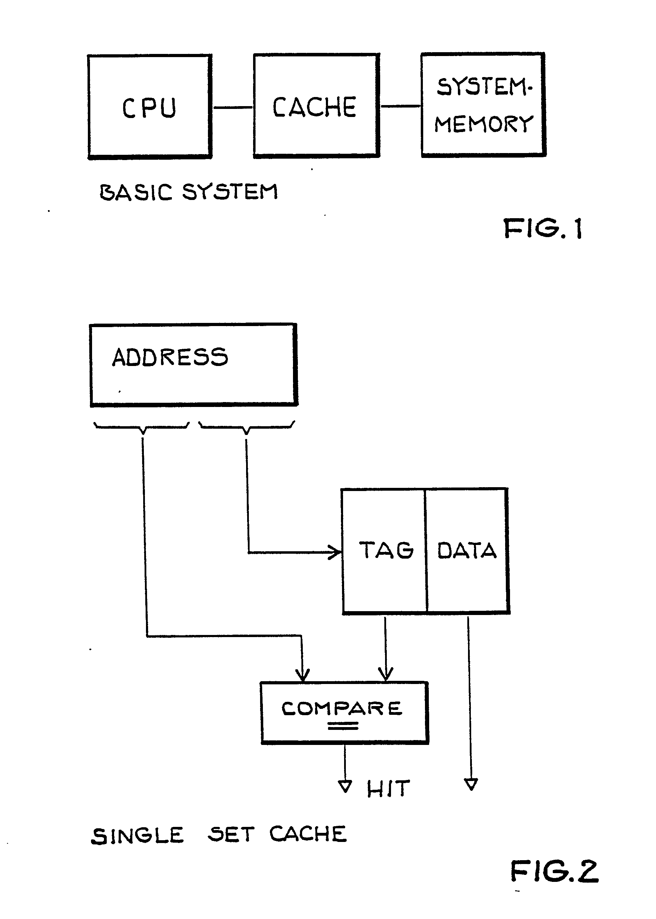

In a typical computer system there is the central processing unit (CPU) which fetches instructions and data from memory. As a performance option a cache memory is often used as a high speed buffer between the CPU and the system memory according to figure 1. Data is fetched from the cache if the data exists in the cache. If the data does not exist in the cache then a call is made to the system memory to obtain that data plus the adjacent data and this data is loaded into the cache.

System memories are usually quite large on the order several megabytes whereas caches are usually of the size of 64 kilo bytes or less. Cache performance is usually on the order of ten times faster than the system memory that it is buffering for.

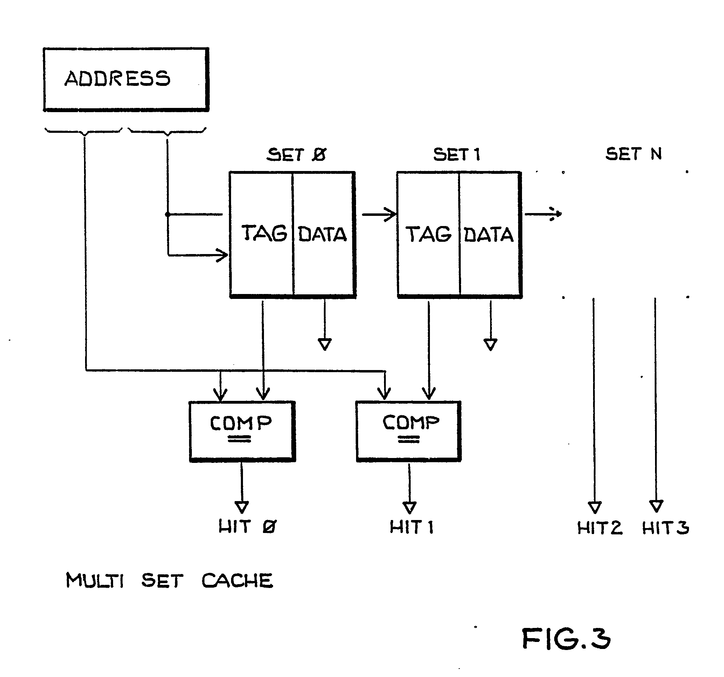

Caches use an associative addressing scheme to determine if the data requested exists in the cache or not. This is usuallay referred to as a cache hit if the data is in cache and a cache miss if the data is not present in the cache. The lower order address bits are used to address the cache memory and the upper order address bits are compared to a tag stored in the cache if the tag and the upper order address bits compare then a cache hit is generated and the data is known to be in the cache. If tag bits do not compare then according to figure 2 a cache miss is generated and the data is fetched from system memory and put in the cache along with tag. It is this comparison of tag to address that is the associative connective. Caches usually are laid out in multiple sets with each set having its own tag. This allows the data to reside in any one of the cache sets but only the one that the tag bits and the upper portion of the address compare (figure 3).

Breakpoints have been added to computer hardware to provide diagnostic help for maintenance and debugging help for software development. A breakpoint is defined as an address that will cause the program execution to break and the computer to halt if that address is ever accessed. It may also cause the computer to interrupt to a debug program in some cases.

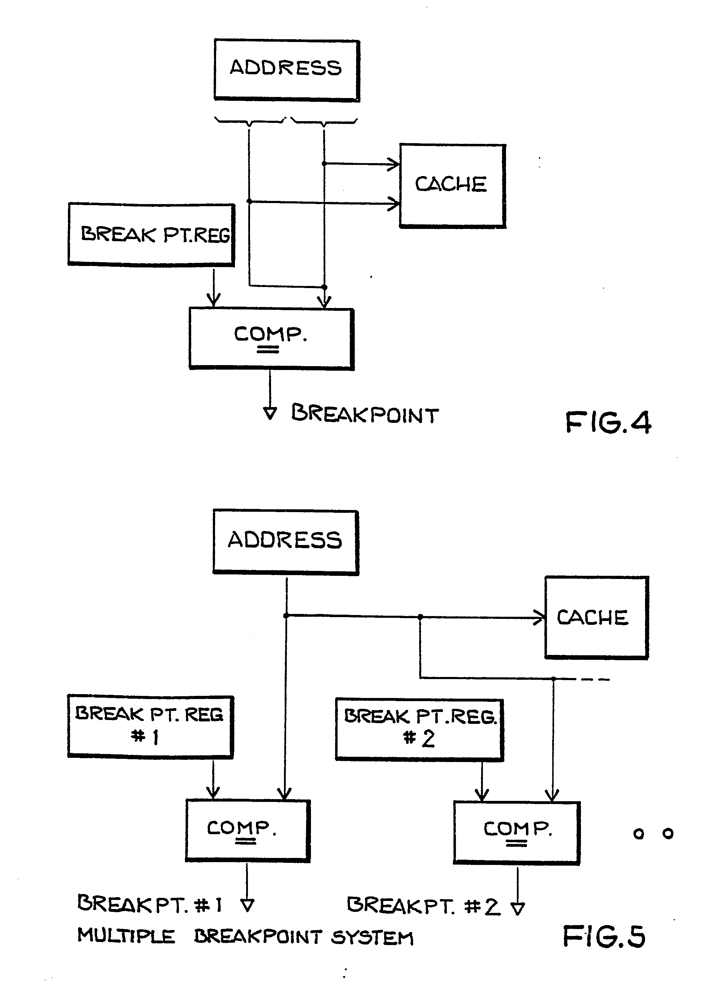

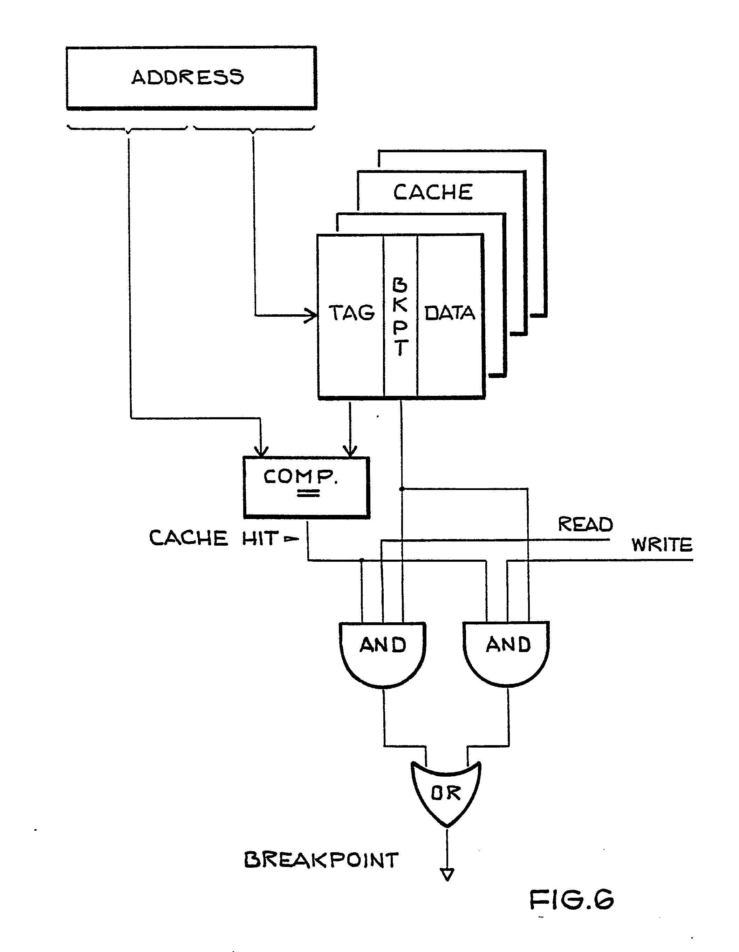

In current systems breakpoints are implemented by using a register to store the breakpoint address and a comparator to compare that address with the address being accessed at the time. If the two are equal, then a breakpoint will happen (figure 4). If multiple breakpoint addresses are desired then a register and comparator must be added for each one (figure 5). This requires a large amount of hardware and board space.

Summary of the Invention

It is the object of the invention to indicate a computer system for implementing a large number of breakpoints with the addition of a very small amount of hardware. According to the invention there is provided a computer system with a cache and a comparator, wherein gates are provided which are connected with the comparator and with the cache sets and wherein for each case set an auxiliary ram is provided.

In a computer system according to the invention the already available cache hit comparators and cache addressing are used to provide the needed address's and comparators. This scheme adds another static RAM chip to each cache set and a detection gate or gates to each set. The number of bits in the breakpoint RAM may be variable to make the breakpoint selective on such things as read, write or instruction fetch. When it is desired to set a breakpoint i.e., as in the conventional system of loading the desired address into the breakpoint register, that address is sent to the cache and if a cache hit is made then the breakpoint bit or bits are written into the breakpoint RAM. If there is a cache miss then the address is sent to the system memory and the data returned and stored in the cache and the breakpoint bit or bits are written into the breakpoint RAM. If that address is ever used again by an instruction then a breakpoint will be generated by the combination of the breakpoint bit or bits in the RAM and the function i.e. read, write etc, and cache hit (see figure 6). The breakpoint bits in the RAM are normally written out or cleared by the program or service that had been using them when it is through with them. Most cache systems use some kind of replacement algorithm so as to know which set to use to load when a cache miss occurs. This algorithm must know of the breakpoint bit and not consider the set for replacement when the breakpoint bit is set.

A number of different variations on this scheme might exist such as the number of cache sets, the number of options on which to cause the break, the size of the cache and the minimal addressable entry in the cache such as byte or word. The method of setting the breakpoint might be by a control switch panel or by an opera tor via executive or debug program. The action taken at the time of the break might be to either halt the computer for investigation via the control panel or by an interrupt to an executive or debugg program for investigation.

Description of the Preferred Embodiments

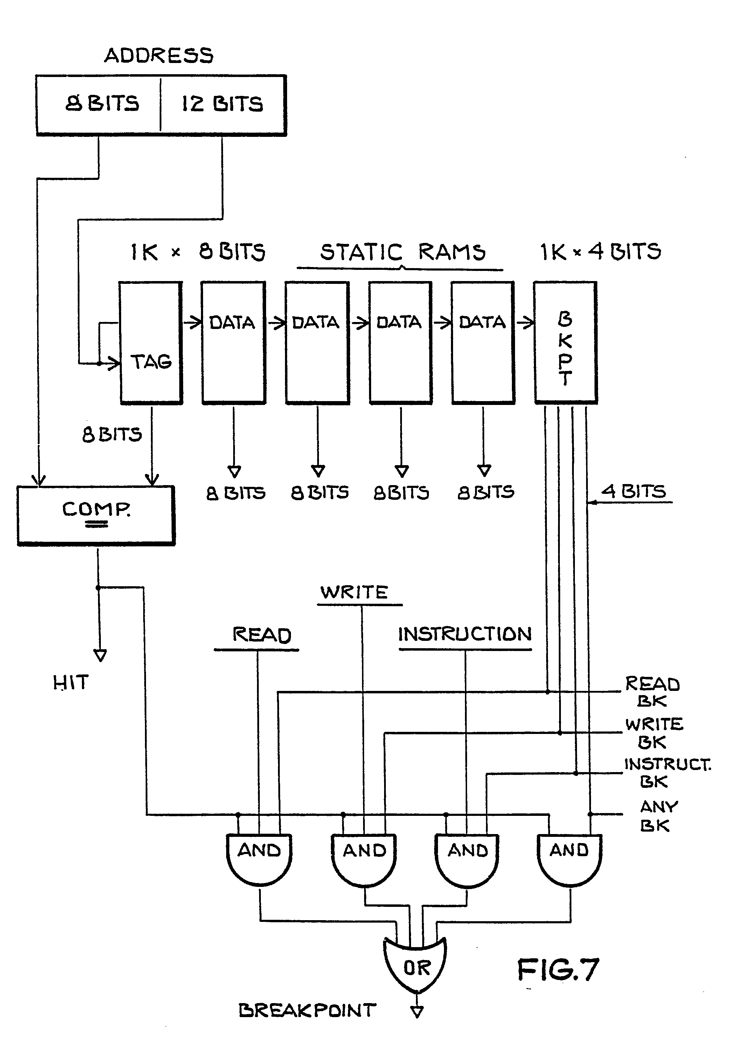

Figure 7 shows a single cache set implementation. There is the basic cache which consists of the address the 5 1k x 8 bit static RAMs and the tag hit comparator. The addition for the breakpoint is the 1k x 4 bit static RAM the 4 "and" gates and the 1 "or" gates. The signals read, write, and instruction would normally be present in the cache control logic. The four bits in the breakpoint RAM are named left to right readbreakpoint, writebreakpoint, instructionbreakpoint, and anybreakpoint. The first "and" gate detects a read breakpoint and a read command and a cache hit this would give a breakpoint. The second gate works the same for writes the third for instructions and the last for any access. The detected signals are then OR'ED at the or gate and if anyone was true a breakpoint will be generated.

Claims

1. A computer system with a cache and a comparator, wherein gates are provided which are connected with the comparator and with the cache sets and wherein for each cache set an auxiliary ram is provided.

2. A computer system as defined in claim 1, wherein in the auxiliary ram to each element in the cache set a control bit or control bits are set.

3. A computer system as defined in claim 1, wherein the control bit or the control bits are used to generate a breakpoint or breakpoints.

4. A computer system as defined in claim 1, wherein the gates are AND-gates or OR-gates.

5. A computer system as defined in claim 1, wherein a breakpoint is generated when a cache-hit occurs and when the control bit is set.

6. A computer system as defined in claim 1, wherein, if the breakpoint is set that location of this cache set is not considered for replacement.

CPU — CACHE — SYSTEM-MEMORY

BASIC SYSTEM

FIG.1

ADDRESS

TAG | DATA

COMPARE
=

HIT

SINGLE SET CACHE

FIG.2

MULTI SET CACHE

FIG.3

FIG.4

MULTIPLE BREAKPOINT SYSTEM

FIG.5

FIG.6

ADDRESS

| 8 BITS | 12 BITS |
|---|---|

1K × 8 BITS          STATIC RAMS          1K × 4 BITS

TAG   DATA   DATA   DATA   DATA   B K P T

8 BITS

8 BITS   8 BITS   8 BITS   8 BITS

4 BITS

COMP.
=

HIT

READ

WRITE

INSTRUCTION

READ BK

WRITE BK

INSTRUCT. BK

ANY BK

AND   AND   AND   AND

OR

BREAKPOINT

FIG.7